Europäisches Patentamt

European Patent Office

Office européen des brevets

(19)

(11) Publication number: 0 351 021
A2

# EUROPEAN PATENT APPLICATION

(12)

(21) Application number: 89201843.3

(51) Int. Cl.⁴: A01N 43/08

(22) Date of filing: 11.07.89

(30) Priority: 13.07.88 GB 8816614

(43) Date of publication of application:
17.01.90 Bulletin 90/03

(84) Designated Contracting States:
BE CH DE ES FR GB GR IT LI NL SE

(71) Applicant: SHELL INTERNATIONALE
RESEARCH MAATSCHAPPIJ B.V.
Carel van Bylandtlaan 30
NL-2596 HR Den Haag(NL)

(72) Inventor: Fenton, Robert
Ahwahnee Tunstall Road
Sittingbourne Kent(GB)
Inventor: Raven, Clive Alan
Hemsby House Hearts Delight
Borden Nr. Sittingbourne Kent(GB)

(74) Representative: Bennett, David Arthur Horder
et al
4, York Road
London SE1 7NA(GB)

(54) Herbicide mixtures.

(57) A herbicidal composition comprises a carrier, a first herbicide and a second herbicide which is 3-(1-amino)-ethylidene-5-methyl-furan-2,4-dione.

## HERBICIDE MIXTURES

This invention relates to compositions for combating undesired plant growth comprising a mixture of herbicides including a substituted furandione herbicide.

It has been recognised for a considerable length of time that certain compounds having an unsaturated lactone ring such as coumarins and tetronic acids are capable of causing chlorophyll inhibition in plants. Thus Hamner and Tukey, Botannical Gazette, 1951, pages 525-528 reported that the compound 3-(alpha-imino-ethyl)-5-methyl tetronic acid, when used to soak seeds or spray seedlings and plants, caused chlorophyll inhibition in wheat, cucumber, sweet corn, radish and red kidney bean. Although the authors remarked that the tetronic acid may have value as a herbicide and that the compound appears to be extremely effective on monocotyledonous plants, they did not postulate any mechanism for the observed chlorophyll inhibiting effects. Chlorophyll inhibition is known to be caused by many different agents including antibiotics, plant hormones, amino acid analogues, herbicides and growth retardants by a variety of mechanisms - see the review article by Wolfe (The Botanical Review, Vol. 43, No. 4, 1977, pages 395 to 425).

The effective control of perennial weeds has long posed a problem in agriculture. Even those commercially available herbicides (such as (2,4-dichlorophenoxy)acetic acid, 2-amino-1,3,4-triazole and N-(phosphonomethyl)glycine), which are capable of exercising some control of perennial weeds, have limited activity against broadleaved (dicotyledonous) perennials.

It has surprisingly been found that certain substituted furandiones have a spectrum of herbicidal activity which renders them particularly suitable for the control of weeds, especially perennial weeds, including broadleaved perennials and that in conjunction with other herbicidally active compounds give herbicidal compositions having a significant and extremely useful spectrum of activity.

Accordingly the present invention provides a herbicidal composition comprising a first compound capable of combating undesired plant growth in admixture with 3-(1-amino)ethylidene-5-methyl-furan-2,4-dione, together with a carrier.

The first compound capable of combating undesired plant growth may be selected from commercially available herbicides including triazines, benzonitriles, ureas, uracils, chloroacetanilides, quaternary ammonium herbicides, phenoxyacids, morphactins, benzoic acids, phenoxypropionates, oximinoethers, carbamates, sulphonyl ureas, imidazolinones, dinitroanilines, pyridazines, pyridazones, diphenyl ethers and pyridines or other known herbicidal compounds such as those named below.

Examples of herbicidal compounds which may be mixed with the furan-2,4-dione to extend the spectrum of herbicidal activity include the following:

a) <u>Triazines</u>:

2-chloro-4,6-bis(ethylamino)-1,3,5-triazine (known as "simazine)
2-chloro-4-(1-cyano-1-methylethylamino)-6-ethylamino-1,3,5-triazine (known as "cyanazine")
2-chloro-4-ethylamino-6-isopropylamino-1,3,5-triazine (known as "atrazine")
2-tert-butylamino-4-chloro-6-ethylamino-1,3,5-triazine (known as "terbuthylazine")
2,4-bis(isopropylamino)-6-methylthio-1,3,5-triazine (known as "prometryne")
2,4-di(ethylamino)-6-methylthio-1,3,5-triazine (known as "simetryne")
2-tert-butylamino-4-ethylamino-6-methylthio-1,3,5-triazine (known as "terbutryne")
2-ethylamino-4-isopropylamino-6-methylthio-1,3,5-triazine (known as "ametryne")
4-amino-6-tert-butyl-4,5-dihydro-3-methylthio-1,2,4-triazin-5-one (known as "metribuzine")
2-tert-butylamino-4-ethylamino-6-methoxy-1,3,5-triazine (known as "terbumeton")
3-cyclohexyl-6-dimethylamino-1-methyl-1,3,5-triazine-2,4(1H,3H)-dione (known as "hexazinone")
4-amino-4,5-dihydro-3-methyl-6-phenyl-1,2,4-triazin-5-one (known as "metamitron")

b) <u>Ureas</u>

3-(3,4-dichlorophenyl)-1,1-dimethylurea (known as "diuron")
3-(4-chlorophenyl)-1,1-dimethylurea and 3-(4-chlorophenyl)-1,1-dimethyluronium trichloroacetate (known as "monuron")
3-(3,4-dichlorophenyl)-1-methoxy-1-methylurea (known as "linuron")
3-(5-tert-butylisoxazol-3-yl)-1,1-dimethylurea (known as "isouron")

2

1-(5-tert-butyl-1,3,4-thiadiazol-2-yl)-1,3-dimethyl-urea (known as "tebuthiuron")
3-[4-(5-tert-butyl-2,3-dihydro-2-oxo-1,3,4-oxadiazol-3-yl)-3-chlorophenyl]-1,1-dimethylurea (known as "dimefuron")
3-(3-chloro-p-tolyl)-1,1-dimethylurea (known as "chlorotoluron")
3-(4-isopropylphenyl)-1,1-dimethylurea (known as "isoproturon")
1-benzothiazol-2-yl-1,3-dimethylurea (known as "methabenzthiazuron")
3-(3-chloro-4-methoxyphenyl)-1,1-dimethylurea (known as "metoxuron")

c) Uracils:

5-bromo-6-methyl-3-(1-methylpropyl)-2,4(1H,3H)-pyrimidinedione (known as "bromacil")
3-cyclohexyl-1,5,6,7-tetrahydrocyclopentapyrimidine-2,4(3H)-dione (known as "lenacil")
5-chloro-3-(1,1-dimethylethyl)-6-methyl-2,4(1H,3H)-pyrimidinedione (known as "terbacil")

d) Chloroacetanilides:

2-chloro-2',6'-diethyl-N-methoxymethyl-acetanilide (known as "alachlor")
2-chloro-N-(2-ethyl-6-methylphenyl)-N-(2-methoxy-1-methylethyl)-acetamide (known as "metolachlor")
2-chloro-N-(2,6-dimethylphenyl)-N-(1H-pyrazol-1-ylmethyl)acetamide (known as "metazachlor")
2-chloro-N-(ethoxymethyl)-N-(2-ethyl-6-methyl-phenyl)-acetamide (known as "acetochlor")
N-(butoxymethyl)-2-chloro-N-(2,6-diethylphenyl)-acetamide (known as "butachlor")

e) Quaternary ammonium herbicides containing:

1,1'-dimethyl-4,4'bipyridyldiylium ion (known as "paraquat")
1,1'-ethylene-2,2'-bipyridyldiylium ion (known as "diquat")
1,2-dimethyl-3,5-diphenylpyrazolium ion (known as "difenzoquat")

f) Phenoxy Acids:

(2,4-dichlorophenoxy)acetic acid (known as "2,4-D")
(RS)-2-(4-chloro-2-methylphenoxy)propionic acid (known as "CMPP")
(4-chloro-2-methylphenoxy)acetic acid (known as "MCPA")
(RS)-2-(2,4-dichlorophenoxy)propionic acid (known as "2,4-DP")
4-(2,4-dichlorophenoxy)butanoic acid (known as "2,4-DB")
N,N-diethyl-2-(1-naphthalenyloxy)propanamide (known as "napropamide")

g) Morphactins:

9-hydroxyfluorene-9-carboxylic acid (known as "flurenol")
2-chloro-9-hydroxyfluorene-9-carboxylic acid (known as "chlorflurenol")

h) Benzoic Acids:

3,6-dichloro-2-methoxybenzoic acid (known as "dicamba")
3-amino-2,5-dichlorobenzoic acid (known as "amiben")
dimethyl-2,3,5,6-tetrachloro-1,4-benzenedicarboxylate (known as "chlorthal-methyl")'

i) Phenoxypropionates:

(RS)-2-[4-(2,4-dichlorophenoxy)phenoxy]propionic acid (known as "diclofop")·
(RS)-2-[4-(5-trifluoromethyl-2-pyridyloxy)-phenoxy]-propionic acid (known as "fluazifop")
(RS)-2-[4-(3-chloro-5-trifluoromethyl-2-pyridyloxy)-phenoxy]propionic acid (known as "haloxyfop")
(RS)-2-[4-(6-chloroquinoxalin-2-yloxy)phenoxy]-propionic acid (known as "quizalofop")
(RS)-2-[4-(6-chlorobenzoxazol-2-yloxy)phenoxy]-propionic acid (known as "fenoxaprop")

j) Oximinoethers:

(RS)-2-[1-ethoxyimino)butyl]-5-[2-(ethylthio)-propyl]-3-hydroxy-2-cyclohexen-1-one (known as "sethoxydim")

methyl-2,2-dimethyl-4,6-dioxo-5-[1-[(2-propenyloxy)-amino]butylidene]cyclohexanecarboxylate (known as "alloxydim")

(E,E)-(±)-2-[1-[[(3-chloro-2-propenyl)oxy]-imino]-propyl]-5-[2-(ethylthio)propyl]-3-hydroxy-2- cyclohexen-1-one (known as "clethodim")

2-[1-(ethoxyimino)propyl]-3-hydroxy-5-(2,4,6-trimethylphenyl)cyclohex-2-enone (known as "tralkoxydim")

(RS)-2-[1-(ethoxyimino)butyl]-3-hydroxy-5-thian-3-ylcyclohex-2-enone (known as "cycloxydim")

k) Carbamates:

3,5-dichloro-N-(1,1-dimethylpropynyl)benzamide (known as "propyzamide")
(R)-1-(ethylcarbamoyl)ethylphenyl carbamate (known as "carbetamide")
1-methylethyl phenylcarbamate (known as "propham")
1-methylethyl (3-chlorophenyl)carbamate (known as "chlorpropham")
3-[(methoxy carbonyl)amino]phenyl(3-methyl-phenyl)-carbamate (known as "phenmedipham")
S-2,3-dichloroallyl di-isopropyl (thiocarbamate) (known as "di-allate")
S-2,3,3-trichloroallyl di-isopropyl (thiocarbamate) (known as "tri allate")
S-propyl butyl(ethyl)thiocarbamate (known as "pebulate")
S-ethyl di-isobutyl thiocarbamate (known as "butylate")
S-ethyl dipropylthiocarbamate (known as "EPTC")
S-propyl dipropyl thiocarbamate (known as "vernolate")
methyl 4-aminophenylsulphonylcarbamate (known as "asulam")
S-4-chlorobenzyl diethylthiocarbamate (known as "benthiocarb")

l) Benzonitriles:

2,6-dichlorobenzonitrile (known as "dichlobenil")
2,6-dichlorothiobenzamide (known as "chlorthiamid")
3,5-dibromo-4-hydroxy benzonitrile (known as "bromoxynil")
4-hydroxy-3,5-di-iodobenzonitrile (known as "ioxynil")

m) Sulphonyl Ureas:

2-[3-(4-methoxy-6-methyl-1,3,5-triazin-2-yl)ureido-sulphonyl]benzoic acid (known as "metsulfuron")
1-(2-chlorophenylsulphonyl)-3-(4-methoxy-6-methyl-1,3,5-triazin-2-yl)urea (known as "chlorsulfuron")
methyl 3-[[(4-methoxy-6-methyl-1,3,5-triazin-2-yl aminocarbonyl]aminosulphonyl]-2-thiophenecarboxylate (known as "thiameturon")
ethyl-2-[3-(4-chloro-6-methoxypyrimidin-2-yl) ureidosulphonyl]benzoate (known as "chlorimuron")
N-(6-methoxy-4-methyl-1,3,5-triazin-2-yl-aminocarbonyl)-2-(2-chloroethoxy)-benzenesulphonamide (known as "triasulfuron")
methyl-2-[3-(4,6-dimethoxypyrimidin-2-yl)ureidosulphonylmethyl]benzoate (known as "benzsulfuron")
methyl-2-[3-(4,6-dimethylpyrimidin-2-yl)ureidosulphonyl]benzoate (known as "sulfometurone-methyl")
methyl 2-[[[[N-(4-methoxy-6-methyl-1,3,5-triazin-2-yl)methylamino]carbonyl]amino]sulfonyl]benzoate (known as "sulfmethmeton-methyl")

n) Imidazolinones:

methyl-6-(4-isopropyl-4-methyl-5-oxo-2-imidazolin-2-yl)-3(4)-methyl benzoate (known as "imazamethbenz")
2-(4-isopropyl-4-methyl-5-oxo-2-imidazolin-2-yl)-quinoline-3-carboxylic acid (known as imazaquin")
(RS)-5-ethyl-2-(4-isopropyl)-4-methyl-5-oxo-2-imidazolin-2-yl)nicotinic acid (known as "imazethapyr")

o) Dinitroanilines:

2,6-dinitro-N,N-dipropyl-4-trifluoromethylaniline (known as "trifluralin")
N-(1-ethylpropyl)-2,6-dinitro-3,4-xylidene (known as "pendimethalin")
4-(dipropylamino)-3,5-dinitrobenzene-sulfonamide (known as "oryzalin")

p) Pyridazines and pyridazones:

5-amino-4-chloro-2-phenyl-3(2H)-pyridazinone (known as "chloridazon")
4-chloro-5-methylamino-2-(3-trifluoromethyl)pyridazin-3-one (known as "norflurazon")
4,5-dimethoxy-2-phenylpyridazin-3(2H)-one (known as "dimethazone")
O-(6-chloro-3-phenyl-4-pyridazinyl)-S-octyl carbonthioate (known as "pyridate")

q) Diphenyl ethers:

2-chloro-1-(3-ethoxy-4-nitrophenoxy)-4-(trifluoromethyl)benzene (known as "oxyfluorfen")
methyl-5-(2,4-dichlorophenoxy)-2-nitrobenzoate (known as "bifenox")

r) Pyridines

3,6-dichloro-2-pyridinecarboxylic acid (known as "clopyralid")
4-amino-3,5,6-trichloro-2-pyridinecarboxylic acid (known as "picloram")
3,5,6-trichloro-2-pyridyloxyacetic acid (known as "triclopyr")
4-amino-3,5-dichloro-6-fluoro-2-pyridyloxyacetic acid (known as "fluoroxypyr")

s) Miscellaneous

N-(phosphonomethyl)glycine (known as "glyphosate")
trimethylsulphonium carboxymethylaminomethyl phosphonate (known as "sulphosate")
N-[3-(1-ethyl-1-methylpropyl)-5-isoxazolyl]-2,6-dimethoxybenzamide (known as "isoxaben")
3-[2,4-dichloro-5-(1-methylethoxy)phenyl]-5-(1,1-dimethylethyl)-1,3,4-oxadiazol-2(3H)-one      (known      as "oxadiazon")
sodium trichloroacetate (known as "TCA")
2,2-dichloropropionic acid (known as "dalapon")
2-(1-methylpropyl)-4,6-dinitrophenol (known as "dinoseb")
2-tert-butyl-4,6-dinitrophenol (known as "dinoterb")
(RS)-2-(3,5-dichlorophenyl)-2-(2,2,2-trichloroethyl)oxirane (known as "tridiphane")
1H-1,2,4-triazol-3-amine (known as "aminotriazole")
2-exo-2-methylbenzyloxy-1-methyl-4-isopropyl-7-oxabicyclo[2.2.1]-heptane (known as "cinmethylin")
2-(3,4-dichlorophenyl)-4-methyl-1,2,4-oxadiazolidine-3,5-dione (known as "methazole")
(RS)-2-amino-4-(hydroxymethylphosphinyl)butanoic acid(known as "glufosinate")
2-amino-4[(hydroxy)(methyl)phosphionyl]butyrylalanylalanine sodium salt (known as "bialaphos")
4-(2,4-dichlorobenzoyl)-1,3-dimethylpyrazol-5-yl-p-toluene sulphonate (known as "pyrazolate")

Among these compounds a preferred group of compounds are simazine, dichlobenil, cyanazine, diuron, isouron, paraquat, glyphosate, glufosinate, aminotriazole, bromacil, 2,4-D, flurenol and oxyfluorfen, clethodim, fluoxypyr, phenmedipham, bromoxynil, methbenzthiazuron and oxadiazon.

The addition of the furan-2,4-dione to the first herbicide extends the spectrum of herbicidal activity and, in particular, extends the spectrum of activity to give a composition capable of combating weeds, especially perennial weeds, including broadleaved perennial species such as calystegia sepium and convolvulus arvensis.

The proportion of first herbicide (or mixture of herbicides) to furan-2,4-dione can vary widely dependant on the desired spectrum of weed control. However the proportion is preferably in the range by weight of from 10:1 to 1:100. More preferably the proportion is in the range of from 2:1 to 1:10.

The compound 3-(1-amino)ethylidene-5-methyl-furan-2,4-dione, which is known, may be obtained, for example, by the method of Tanaka et al (Chem. Pharm. Bull., Vol 27, No 8, 1979, pages 1901-1906).

The (S) and (R) enantiomers thereof and their preparation are described in our copending application no.      (T 611)

The invention also includes the use of compositions as described above as herbicides. Further the invention also provides a method of combating undesired plant growth at a locus by treating the locus with a composition according to the invention. Application to the locus may be pre-emergence or post-emergence.

The dosage of total active ingredient used may, for example, be in the range of from 0.05 to 10kg/ha, preferably from 0.05 to 5kg/ha. A carrier used in the composition is any material with which the active ingredient is formulated to facilitate application to the locus to be treated which may for example be a plant, seed or soil, or to facilitate storage, transport or handling. A carrier may be a solid or a liquid, including a material which is normally gaseous but which has been compressed to form a liquid, and any of the carriers normally used in formulating herbicidal compositions may be used. Preferably compositions according to the invention contain 0.5 to 95% by weight of active ingredient.

Suitable solid carriers include natural and synthetic clays and silicates, for example natural silicas such as diatomaceous earths; magnesium silicates, for example talcs; magnesium aluminium silicates, for example attapulgites and vermiculites; aluminium silicates, for example kaolinites, montomorillonites and micas; calcium carbonate, calcium sulphate; ammonium sulphate; synthetic hydrated silicon oxides and synthetic calcium or aluminium silicates; elements, for example carbon and sulphur; natural and synthetic resins, for example coumarone resins, polyvinyl chloride, and styrene polymers and copolymers; solid polychlorophenols; bitumen; waxes; and solid fertilisers, for example superphosphates.

Suitable liquid carriers include water; alcohols, for example isopropanol and glycols; ketones, for example acetone, methyl ethyl ketone, methyl isobutyl ketone and cyclohexanone; ethers; aromatic or araliphatic hydrocarbons, for example benzene, toluene and xylene; petroleum fractions, for example kerosine and light mineral oils; chlorinated hydrocarbons, for example carbon tetrachloride, perchloroethylene and trichloroethane. Mixtures of different liquids are often suitable.

Agricultural compositions are often formulated and transported in a concentrated form which is subsequently diluted by the user before application. The presence of small amounts of a carrier which is a surface-active agent facilitates this process of dilution. Thus preferably at least one carrier in a composition used in accordance with the invention is a surface-active agent. For example the composition may contain at least two carriers, at least one of which is a surface-active agent.

A surface-active agent may be an emulsifying agent, a dispersing agent or a wetting agent; it may be nonionic or ionic. Examples of suitable surface-active agents include the sodium or calcium salts of polyacrylic acids and lignin sulphonic acids; the condensation of fatty acids or aliphatic amines or amides containing at least 12 carbon atoms in the molecule with ethylene oxide and/or propylene oxide; fatty acid esters of glycerol, sorbitan, sucrose or pentaerythritol; condensates of these with ethylene oxide and/or propylene oxide; condensation products of fatty alcohol or alkyl phenols, for example p-octylphenol or p-octylcresol, with ethylene oxide and/or propylene oxide; sulphates or sulphonates of these condensation products; alkali or alkaline earth metal salts, preferably sodium salts, of sulphuric or sulphonic acid esters containing at least 10 carbon atoms in the molecule, for example sodium lauryl sulphate, sodium secondary alkyl sulphates, sodium salts of sulphonated castor oil, and sodium alkylaryl sulphonates such as dodecylbenzene sulphonate; and polymers of ethylene oxide and copolymers of ethylene oxide and propylene oxide.

The compositions used in the invention may for example be formulated as wettable powders, dusts, granules, solutions, emulsifiable concentrates, emulsions, suspension concentrates and aerosols. Wettable powders usually contain 25, 50 or 75% w of active ingredient and usually contain in addition to solid inert carrier, 3-10% w of a dispersing agent and, where necessary, 0-10% w of stabiliser(s) and/or other additives such as penetrants or stickers. Dusts are usually formulated as a dust concentrate having a similar composition to that of a wettable powder but without a dispersant, and are diluted in the field with further solid carrier to give a composition usually containing ½-10% w of active ingredient. Granules are usually prepared to have a size between 10 and 100 BS mesh (1.676 - 0.152 mm), and may be manufactured by agglomeration or impregnation techniques. Generally, granules will contain ½-75% w active ingredient and 0-10% w of additives such as stabilisers, surfactants, slow release modifiers and binding agents. The so-called "dry flowable powders" consist of relatively small granules having a relatively high concentration of active ingredient. Emulsifiable concentrates usually contain, in addition to a solvent and, when necessary, co-solvent, 10-50% w/v active ingredient, 2-20% w/v emulsifiers and 0-20% w/v of other additives such as stabilisers, penetrants and corrosion inhibitors. Suspension concentrates are usually compounded so as to obtain a stable, non-sedimenting flowable product and usually contain 10-75% w active ingredient, 0.5-15% w of dispersing agents, 0.1-10% w of suspending agents such as protective colloids and thixotropic agents, 0-10% w of other additives such as defoamers, corrosion inhibitors, stabilisers, penetrants and stickers, and water or an organic liquid in which the active ingredient is substantially insoluble; certain organic solids or inorganic salts may be present dissolved in the formulation to assist in preventing sedimentation or as anti-freeze agents for water.

Aqueous dispersions and emulsions, for example compositions obtained by diluting a wettable powder or a concentrate according to the invention with water, also lie within the scope of the invention. The said emulsions may be of the water-in-oil or of the oil-in-water type, and may have a thick 'mayonnaise'-like consistency.

The compositions used in the invention may also contain other ingredients, for example other compounds possessing insecticidal or fungicidal properties.

The invention will now be described with reference to the following Examples. Example 1 illustrates the preparation of (S)-3-(1-amino)ethyl idene-5-methyl-furan-2,4-dione used in Examples 2, 3 and 4. The remaining Examples employ racemic 3-(1-amino)ethylidene-5-methyl-furan-2,4-dione.

## Example 1

Preparation of (S)-3-(1-amino)ethylidene-5-methyl-furan-2,4-dione

### a) Methyl (S)-α-(acetoacetoxy)-propionate

To a mixture of (S)-methyl lactate (14g, 0.134 moles) and triethylamine (0.2g, 1.9 mmoles), was added diketene at 65°-75°C dropwise over 40 minutes with rapid stirring. The reaction was stirred at 70°C for a further 30 minutes, cooled to room temperature and distilled at reduced pressure to give the title compound as a colourless oil. B.p. 96°-98°C 0.1 mmHg. Yield 19.1gm (85%).

### b) (S)-3-acetyl-5-methyl-furan-2,4-dione

To a solution of the ester prepared in part a) above (8g, 46.5mmoles) in dry t-butanol (17ml) was added potassium t-butoxide (4.8gm, 43 mmoles) in one portion with rapid stirring. The reaction was stirred at reflux under nitrogen for 2 hours, cooled to room temperature, acidified with 6N HCl and extracted with chloroform (3x20ml). The combined extracts were dried (MgSO₄) and solvent removed.

The crude product was redissolved in ether (20ml) and cooled to -78°C for 20 minutes during which time the product recrystallised. The product was filtered and further purified by a second low temperature recrystallisation to give the title compound as a white solid, mp. 55°-56°C. Yield 4.3g (65%). [α] = -38.9 C = 0.0095 in ethanol.

### c) (S)-3-(1-amino)ethylidene-5-methyl-furan-2,4-dione

To a solution of the compound prepared in part (b) above (0.3g, 1.9 mmol) in absolute ethanol (1ml) was added a solution of ammonia (10% w/v) in ethanol (4 ml). The mixture was heated in a sealed tube for 2 hours at 100°C, cooled to room temperature and the solvent removed. The product was purified by chromatography on silica, eluting with ethyl acetate to give the title compound as a white solid, mp. 157-159°C. Yield 0.29g (96%). [α] = -45.51 C = 0.0145 in ethanol.

## Example 2

Herbicidal Activity

To evaluate their herbicidal activity, compositions according to the invention were tested comprising (S)-3-(1-amino)ethylidene-5-methyl-furan-2,4-dione (referred to as "(S)-dione") and A) 2-chloro-4,6-bis (ethylamino)-1,3,5-triazine ("Compound A") and 2,6-dichlorobenzonitrile ("Compound B").

The tests conducted were either foliar (post-emergence) spray tests, in which seedling plants were sprayed with a formulation containing the test compound, or pre-emergence tests in which soil sown with seeds of the test species is sprayed with the test formulation. The test plant species were calystegia sepium (SE), elymus repens (CO), convolvulus arvensis (CV) and wheat (WH).

The soil used in the test was a prepared horticultural loam, irrigated throughout the test period via capillary matting.

The formulations used in the tests were prepared from solutions of the test compound or mixture in acetone containing 0.2% by weight of an alkylphenol/ethylene oxide condensate available under the trade name TRITON X-155. The acetone solutions were diluted with an equal volume of water and the resulting formulations sprayed at an application volume of 600 l/ha at the dosage levels given in Table 1 below. Three replicate pots were used for each treatment. Untreated seedling plants were used as controls for post emergence tests, and untreated, seeded soil as controls for pre-emergence tests.

At 21 to 28 days after treatment, phytotoxicity compared with the untreated control, was assessed visually on a 0 to 9 scale, 0 indicating no effect and 9 indicating death. The results are given as percentages in Table 1 below.

Table 1

| Treatment | Dose kg/ha | Application | SE | CO | CV | WH |
|---|---|---|---|---|---|---|
| Compound A | 1.3 | Pre-emergence | 90 | 61 | - | 55 |
| Compound A + (S)-dione | 0.6 + 0.6 | Pre-emergence | 100 | 100 | - | 72 |
| Compound B | 1.3 | Pre-emergence | 39 | 13 | - | 43 |
| Compound B + (S)-dione | 0.6 + 0.6 | Pre-emergence | 98 | 96 | - | 39 |
| Compound A | 1.0 | Foliar spray | 83 | 30 | 69 | - |
| Compound A + (S)-dione | 0.3 + 0.6 | Foliar spray | 98 | 89 | 93 | - |

It will be seen from the above results that the inclusion of the (S)-dione in the herbicidal mixture extends the herbicidal effect against both monocotyledonous and dicotyledenous perennial weed species: (CO), (SE) and (CV).

Example 3

Pre-emergence Herbicidal Acticity .

To evaluate further the pre-emergence herbicidal activity of mixtures of (S)-3-(1-amino)ethylidene-5-methyl-furan-2,4-dione ("(S)-dione") and A) compound A ie. 2-chloro-4,6-bis(ethylamino)-1,3,5-triazine and B) compound B ie. 2,6-dichlorobenzonitrile, pre-emergence tests were carried out as described in Example 2 on the species elymus repens (CO). Assessments were made at 12, 20, 28 and 39 days after treatment (DAT).

The results were subjected to a standard probit analysis by computer to calculate the dosage of each compound or mixture, in kg/ha, required to kill 50% of the test species. This dosage is referred to as the $GID_{50}$ dosage. If a mixture of herbicides A and B act together in an additive way, one would expect the $GID_{50}$ values for A and B in the mixture to be given by the equations (i) and (ii) below:

$$GID_{50} \text{ of B in mixture} = \frac{a}{Z + \dfrac{a}{b}} \qquad (i)$$

$GID_{50}$ of A in mixture = ($GID_{50}$ of B in mixture)x Z    (ii)

where

a = $GID_{50}$ of A used alone

b = $GID_{50}$ of B used alone

Z = weight ratio of compound A to compound B in mixture.

By $GID_{50}$ of A (or B) in the mixture is meant the dosage of A (or B) which is applied, in kg/ha, when a mixture which kills 50% of the test species is employed.

If only one component of a mixture is active against the test species at the dose rates used in the test then one would expect the $GID_{50}$ values for that compound to be the same in all mixtures i.e. the other component should make no contribution to the activity.

8

If the measured $GID_{50}$ values are in fact less than the calculated values, the mixture is synergistic.

The results of the tests are given in Table 2 below, which give the $GID_{50}$ values (in kg/ha) observed, and, in parentheses after these observed values, the values calculated according to the above equations. The results were all subjected to analysis to assess their statistical significance and the table denotes synergism at a statistically significant level.

## Table 2

| Mixture Partner | DAT | Mixture Ratio Dione:A or B | $GID_{50}$ values Dione | A or B |
|---|---|---|---|---|
| - | 12 | 1:0 | 0.279 (0.279) | - |
| A | 12 | 1:1 | 0.098 (0.258) | 0.098 (0.258) |
| A | 12 | 0:1 | - | 3.359 (3.359) |
| B | 12 | 1:1 | 0.073 (0.252) | 0.073 (0.252) |
| B | 12 | 0:1 | - | 2.576 (2.576) |
| - | 20 | 1:0 | 0.185 (0.185) | - |
| A | 20 | 1:1 | 0.064 (0.149) | 0.064 (0.149) |

EP 0 351 021 A2

Table 2 (Continued)

| Mixture Partner | DAT | Mixture Ratio Dione:A or B | GID$_{50}$ values Dione | A or B |
|---|---|---|---|---|
| A | 20 | 0:1 | – | 0.756 (0.756) |
| B | 20 | 1:1 | 0.064 (0.167) | 0.064 (0.167) |
| B | 20 | 0:1 | – | 1.759 (1.759) |
| – | 28 | 1:0 | 0.171 (0.171) | – |
| A | 28 | 1:1 | 0.077 (0.139) | 0.077 (0.139) |
| A | 28 | 0:1 | – | 0.747 (0.747) |
| B | 28 | 1:1 | 0.074 (0.161) | 0.074 (0.161) |
| B | 28 | 0:1 | – | 2.785 (2.785) |

EP 0 351 021 A2

Table 2 (Continued)

| Mixture Partner | DAT | Mixture Ratio Dione:A or B | GID$_{50}$ values Dione | A or B |
|---|---|---|---|---|
| – | 39 | 1:0 | 0.236 (0.236) | – |
| A | 39 | 1:1 | 0.099 (0.169) | 0.099 (0.169) |
| A | 39 | 0:1 | – | 0.590 (0.590) |
| B | 39 | 1:1 | 0.093 (0.214) | 0.093 (0.214) |
| B | 39 | 0:1 | – | 2.339 (2.339) |

Example 4

Post-emergence Herbicidal Acticity

To evaluate further the post emergence herbicidal activity of mixtures of (S)-3-(1-amino)ethylidene-5-methyl-furan-2,4-dione and simazine post-emergence foliar spray tests were carried out as described in Example 2 on the species calystegia sepium (SE), elymus repens (CO) and convolvulus arvensis (CV). Assessments were made at 9, 14, 23 and 33 days after treatment (DAT).

The GID$_{50}$ values were calculated as described in Example 3 and the results of the tests are given in Table 3 below.

EP 0 351 021 A2

Table 3

| Species | DAT | Mixture Ratio Dione:Simazine | GID$_{50}$ values | |
|---------|-----|------------------------------|-------------------|---|
| | | | Dione | Simazine |
| SE | 9 | 1:0 | 0.073 (0.073) | — |
| | | 2:1 | 0.017 (0.067) | 0.009 (0.034) |
| | | 0:1 | — | 0.414 (0.414) |
| CO | 9 | 1:0 | 0.779 (0.779) | — |
| | | 2:1 | 0.311 (0.751) | 0.156 (0.376) |
| | | 0:1 | — | 10.528 (10.528) |
| CV | 9 | 1:0 | 0.046 (0.046) | — |
| | | 2:1 | 0.012 (0.045) | 0.006 (0.023) |
| | | 0:1 | — | 1.049 (1.049) |
| SE | 14 | 1:0 | 0.083 (0.083) | — |
| | | 2:1 | 0.025 (0.072) | 0.012 (0.036) |
| | | 0:1 | — | 0.264 (0.264) |

EP 0 351 021 A2

## Table 3 (Continued)

| Species | DAT | Mixture Ratio Dione:Simazine | GID$_{50}$ values | |
|---|---|---|---|---|
| | | | Dione | Simazine |
| CO | 14 | 1:0 | 0.772 (0.772) | — |
| | | 2:1 | 0.273 (0.684) | 0.136 (0.342) |
| | | 0:1 | — | 3.008 (3.008) |
| CV | 14 | 1:0 | 0.029 (0.029) | — |
| | | 2:1 | 0.011 (0.028) | 0.006 (0.014) |
| | | 0:1 | — | 0.275 (0.275) |
| SE | 23 | 1:0 | 0.108 (0.108) | — |
| | | 2:1 | 0.038 (0.091) | 0.019 (0.045) |
| | | 0:1 | — | 0.280 (0.280) |
| CO | 23 | 1:0 | 0.855 (0.855) | — |
| | | 2:1 | 0.162 (0.676) | 0.081 (0.338) |
| | | 0:1 | — | 1.613 (1.613) |

## Table 3 (Continued)

| Species | DAT | Mixture Ratio Dione:Simazine | GID$_{50}$ values Dione | Simazine |
|---------|-----|------------------------------|----------------------------|----------|
| CV | 23 | 1:0 | 0.035 (0.035) | — |
|    |    | 2:1 | 0.017 (0.033) | 0.009 (0.017) |
|    |    | 0:1 | — | 0.324 (0.324) |
| SE | 33 | 1:0 | 0.212 (0.212) | — |
|    |    | 2:1 | 0.069 (0.168) | 0.034 (0.084) |
|    |    | 0:1 | — | 0.403 (0.403) |
| CO | 33 | 1:0 | 0.978 (0.978) | — |
|    |    | 2:1 | 0.142 (0.668) | 0.071 (0.334) |
|    |    | 0:1 | — | 1.052 (1.052) |
| CV | 33 | 1:0 | 0.037 (0.037) | — |
|    |    | 2:1 | 0.026 (0.036) | 0.013 (0.018) |
|    |    | 0:1 | — | 0.590 (0.590) |

EP 0 351 021 A2

Example 5

Post-emergence Herbicidal Activity

Further compositions were evaluated for post-emergence herbicidal activity using the general method described in Example 2. The compositions comprised racemic 3-(1-amino)ethylidene-5-methyl-furan-2,4-dione ("(±)-dione") and one of the following mixture partners:

2-chloro-4-(1-cyano-1-methylethylamino)-6-ethylamino-1,3,5-triazine ("Compound C"),

3-(3,4-dichlorophenyl)-1,1-dimethylurea ("Compound D");

2-(5-tert-butylisoxazol-3-yl)-1,1-dimethylurea ("Compound E"); and

2-chloro-1-(3-ethoxy-4-nitrophenoxy)-4-(trifluoromethyl)benzene ("Compound F").

The test plant species were those given in Example 2 together with Bromus sterilis (BB) and Galium aparine (GG). The formulations were prepared as in Example 2. The dosage levels are given in Table 4 below. The dosage levels were chosen to correspond to recommended dose rates in the field for compounds C to F and the mixtures were formed by adding these dosages to a dose of 0.5 or 1.0 kg/ha of (±)-dione. Phytotoxicity was assessed after 20 days. The results are given as percentages in Table 4.

Table 4

| Treatment | Dose kg/ha | WH | CO | CV | BB | GG | SE |
|---|---|---|---|---|---|---|---|
| (±)-dione | 1.0 | 40.74 | 59.26 | 75.93 | 57.41 | 68.52 | 72.22 |
|  | 0.5 | 40.74 | 46.30 | 66.67 | 57.41 | 53.70 | 72.22 |
| Compound C | 0.24 | 44.44 | 20.37 | 74.07 | 44.44 | 72.22 | 100.00 |
|  | 0.12 | 33.33 | 7.41 | 83.21 | 35.19 | 59.26 | 100.00 |
| Compound C + (±)-dione | 1.24 | 50.00 | 83.33 | 94.44 | 62.96 | 81.48 | 100.00 |
|  | 0.62 | 42.59 | 64.81 | 90.74 | 44.44 | 81.48 | 100.00 |
| Compound D | 0.6 | 50.00 | 50.00 | 96.30 | 55.56 | 100.00 | 100.00 |
|  | 0.3 | 50.00 | 44.44 | 88.89 | 55.56 | 100.00 | 100.00 |
| Compound D + (±)-dione | 1.6 | 64.81 | 83.33 | 100.00 | 66.67 | 85.19 | 100.00 |
|  | 0.8 | 50.00 | 75.93 | 94.44 | 55.56 | 82.36 | 100.00 |
| Compound E | 1.0 | 92.59 | 75.93 | 94.44 | 79.63 | 85.19 | 100.00 |
|  | 0.5 | 77.78 | 48.15 | 68.52 | 72.22 | 83.33 | 100.00 |
| Compound E + (±)-dione | 2.0 | 87.04 | 75.93 | 96.30 | 88.89 | 98.15 | 100.00 |
|  | 1.0 | 75.93 | 75.93 | 88.89 | 77.78 | 94.44 | 100.00 |
| Compound F | 0.1 | 81.48 | 35.19 | 92.59 | 85.19 | 85.19 | 100.00 |
|  | 0.05 | 59.26 | 25.93 | 79.63 | 66.67 | 68.52 | 100.00 |
| Compound F + (±)-dione | 1.1 | 88.89 | 77.78 | 94.44 | 98.15 | 92.59 | 100.00 |
|  | 0.55 | 70.37 | 62.96 | 92.59 | 87.04 | 77.78 | 100.00 |

It will be seen from the above results that the inclusion of the (±)-dione in the mixtures extends the herbicidal effect of compounds C to F when used singly.

Example 6

Post-emergence Herbicidal Activity

Example 5 was repeated using the racemic 3-(1-amino)ethylidene-5-methyl-furan-2,4-dione ("(±)-dione") together with commercially formulated materials of the following further mixture partners:

1,1'-dimethyl-4,4'-bipyridyldiylium ion-containing herbicide (known as "paraquat") ("Compound G");

17

N-(phosphonomethyl)glycine ("Compound H")
(RS)-2-amino-4-(hydroxymethylphosphinyl)butanoic acid ("Compound I");
1H-1,2,4-triazol-3-amine ("Compound J");
5-bromo-6-methyl-3-(1-methylpropyl)-2,4(1H,3H)-pyrimidinedione ("Compound K");
(2,4-dichlorophenoxy)acetic acid ("Compound L");
and 9-hydroxyfluorene-9-carboxylic acid ("Compound M").

The results are given in Table 5 below. The species identified in the Table are: wheat (WH), elymus repens (CO), convolvulus arvensis (CV), Bromus sterilis (BB), Galium aparine (GG) and calystegia sepium - (SE).

## Table 5

| Treatment | Dose kg/ha | WH | CO | CV | BB | GG | SE |
|---|---|---|---|---|---|---|---|
| (±)-dione | 1.0 | 40.74 | 46.30 | 74.07 | 62.96 | 55.56 | 72.22 |
| | 0.5 | 33.33 | 46.30 | 68.52 | 44.44 | 44.44 | 72.22 |
| Compound G | 0.2 | 98.15 | 83.33 | 79.63 | 100.00 | 75.93 | 100.00 |
| | 0.1 | 94.44 | 77.78 | 51.85 | 94.44 | 62.96 | 69.44 |
| Compound G +(±)-dione | 1.2 | 98.15 | 88.89 | 83.33 | 100.00 | 79.63 | 100.00 |
| | 0.6 | 96.30 | 68.52 | 77.78 | 100.00 | 77.78 | 97.22 |
| Compound H | 0.5 | 85.19 | 74.07 | 64.81 | 81.48 | 59.26 | 55.56 |
| | 0.25 | 14.81 | 50.00 | 42.59 | 0.00 | 18.52 | 22.22 |
| Compound H +(±)-dione | 1.5 | 87.04 | 79.63 | 68.52 | 77.78 | 62.96 | 72.22 |
| | 0.75 | 70.37 | 61.11 | 64.81 | 61.11 | 51.85 | 61.11 |
| Compound I | 0.76 | 100.00 | 83.33 | 96.30 | 100.00 | 87.04 | 100.00 |
| | 0.38 | 96.30 | 62.96 | 79.63 | 94.44 | 75.93 | 100.00 |
| Compound I +(±)-dione | 1.76 | 98.15 | 87.04 | 100.00 | 98.15 | 88.89 | 100.00 |
| | 0.88 | 96.30 | 70.37 | 83.33 | 94.44 | 79.63 | 100.00 |
| Compound J | 2.0 | 83.33 | 83.33 | 74.07 | 88.89 | 79.63 | 80.56 |
| | 1.0 | 85.19 | 77.78 | 61.11 | 88.89 | 70.37 | 77.78 |
| Compound J +(±)-dione | 3.0 | 92.59 | 77.78 | 70.37 | 90.74 | 79.63 | 77.78 |
| | 1.5 | 85.19 | 77.78 | 68.52 | 88.89 | 74.07 | 77.78 |

EP 0 351 021 A2

EP 0 351 021 A2

## Table 5 (continued)

| Treatment | Dose kg/ha | WH | CO | CV | BB | GG | SE |
|---|---|---|---|---|---|---|---|
| Compound K | 1.5 | 50.00 | 42.59 | 46.30 | 59.26 | 92.59 | 100.00 |
|  | 0.75 | 40.74 | 25.93 | 22.10 | 48.15 | 92.59 | 86.11 |
| Compound K +(±)-dione | 2.5 | 83.33 | 90.74 | 96.30 | 77.78 | 96.30 | 100.00 |
|  | 1.25 | 59.26 | 72.22 | 94.44 | 66.67 | 94.44 | 100.00 |
| Compound L | 0.3 | 0.00 | 0.00 | 61.11 | 0.00 | 0.00 | 100.00 |
|  | 0.15 | 0.00 | 0.00 | 59.26 | 0.00 | 0.00 | 77.78 |
| Compound L +(±)-dione | 1.3 | 7.41 | 48.15 | 74.07 | 55.56 | 55.56 | 100.00 |
|  | 0.65 | 7.41 | 42.59 | 70.37 | 53.70 | 37.04 | 91.67 |
| Compound M | 0.12 | 0.00 | 0.00 | 20.37 | 0.00 | 55.56 | 55.56 |
|  | 0.06 | 0.00 | 0.00 | 11.11 | 0.00 | 55.56 | 44.44 |
| Compound M +(±)-dione | 1.12 | 31.48 | 48.15 | 77.78 | 68.52 | 66.67 | 88.89 |
|  | 0.56 | 29.63 | 44.44 | 74.07 | 38.89 | 64.81 | 86.11 |

Again it will be seen from the above results that the inclusion of the (±)-dione in the mixtures extends the herbicidal effect of compounds G to M.

Example 7

Post-emergence Herbicidal Activity

To evaluate further the post-emergence herbicidal activity of mixtures of racemic 3-(1-amino)ethylidene-5-methyl-furan-2,4-dione ("(±)-dione") and, as mixture partner, one of Compounds C to M, post-emergence tests were carried out as described in Example 2 on the six species used in Examples 5 and 6. Evaluations were made at 13 days after treatment and $GID_{50}$ values calculated as described in Example 3. Compounds C, D, E and F were formulated in acetone as described in Example 2. Compounds G, H, I, K, L and M were used as commercially formulated materials. The results for WH, CO, CV, BB, GG and SE respectively are given in Tables 6 to 11 below.

Table 6

| Species WH | | | | | |
|---|---|---|---|---|---|
| Treatment | Ratio (±)-Dione:Mixture Partner | (±)-Dione | | Mixture Partner | |
| (±)-Dione | 1:0 | 2.136 | (2.136) | - | - |
| Compound H + (±)-Dione | 2:1 | 0.285 | (0.865) | 0.142 | (0.433) |
| Compound H | 0:1 | - | - | 0.727 | (0.727) |
| Compound I + (±)-dione | 1:0.76 | 0.026 | (0.043) | 0.020 | (0.032) |
| Compound I | 0:1 | - | - | 0.033 | (0.033) |
| Compound K + (±)-dione | 1:1.5 | 0.344 | (0.685) | 0.516 | (1.028) |
| Compound K | 0:1 | - | - | 1.514 | (1.514) |

Table 7

| Species CO | | | | | |
|---|---|---|---|---|---|
| Treatment | Ratio (±)-Dione:Mixture Partner | (±)-Dione | | Mixture Partner | |
| (±)-Dione | 1:0 | 0.870 | (0.870) | - | - |
| Compound C + (±)-Dione | 1:0.24 | 0.327 | (0.813) | 0.079 | (0.195) |
| Compound C | 0:1 | - | - | 2.996 | (2.996) |
| Compound D + (±)-Dione | 1:0.6 | 0.194 | (0.375) | 0.117 | (0.225) |
| Compound D | 0:1 | - | - | 0.396 | (0.396) |
| Compound E + (±)-Dione | 1:1 | 0.264 | (0.318) | 0.264 | (0.318) |
| Compound E | 0:1 | - | - | 0.500 | (0.500) |
| Compound F + (±)-Dione | 1:0.1 | 0.154 | (0.555) | 0.015 | (0.055) |
| Compound F | 0:1 | - | - | 0.153 | (0.153) |
| (±)-Dione | 1:0 | 1.233 | (1.233) | - | - |
| Compound K + (±)-Dione | 1:1.5 | 0.166 | (0.914) | 0.250 | (1.371) |
| Compound K | 0:1 | - | - | 5.305 | (5.305) |

21

Table 8

| Species CV | | | | | | |
|---|---|---|---|---|---|---|
| Treatment | Ratio (±)-Dione:Mixture Partner | (±)-Dione | | Mixture Partner | |
| (±)-Dione | 1:0 | 0.245 | (0.245) | - | - |
| Compound D + (±)-Dione | 1:0.6 | 0.031 | (0.053) | 0.019 | (0.032) |
| Compound D | 0:1 | - | - | 0.041 | (0.041) |
| Compound F + (±)-Dione | 1:0.1 | 0.006 | (0.010) | 0.306 | (0.001) |
| Compound F | 0:1 | - | - | 0.001 | (0.001) |
| (±)-Dione | 1:0 | 0.195 | (0.195) | - | - |
| Compound K + (±)-Dione | 1:1.5 | 0.084 | (0.179) | 0.125 | (0.269) |
| Compound K | 0:1 | - | - | 3.303 | (3.303) |
| Compound M + (±)-Dione | 1:0.12 | 0.120 | (0.193) | 0.014 | (0.023) |
| Compound M | 0:1 | - | - | 2.508 | (2.508) |

Table 9

| Species BB | | | | | | |
|---|---|---|---|---|---|---|
| Treatment | Ratio (±)-Dione:Mixture Partner | (±)-Dione | | Mixture Partner | |
| (±)-Dione | 1:0 | 0.572 | (0.572) | - | - |
| Compound F + (±)-Dione | 1:0.1 | 0.042 | (0.099) | 0.004 | (0.010) |
| Compound F | 0:1 | - | - | 0.012 | (0.012) |
| (±)-Dione | 1:0 | 0.603 | (0.603) | - | - |
| Compound H + (±)-Dione | 1:0.5 | 0.262 | (0.431) | 0.131 | (0.216) |
| Compound H | 0:1 | - | - | 0.756 | (0.756) |
| Compound K + (±)-Dione | 1:1.5 | 0.168 | (0.261) | 0.253 | (0.392) |
| Compound K | 0:1 | - | - | 0.692 | (0.692) |

Table 10

| Species GG | | | | | |
|------------|-----------------------------|---------|---------|---------|---------|
| Treatment | Ratio (±)-Dione:Mixture Partner | (±)-Dione | | Mixture Partner | |
| (±)-Dione | 1:0 | 0.280 | (0.280) | - | - |
| Compound C + (±)-Dione | 1:0.24 | 0.028 | (0.084) | 0.007 | (0.020) |
| Compound C | 0:1 | - | - | 0.029 | (0.029) |
| Compound E + (±)-Dione | 1:1 | 0.003 | (0.030) | 0.003 | (0.030) |
| Compound E | 0:1 | - | - | 0.033 | (0.033) |
| Compound F + (±)-Dione | 1:0.1 | 0.015 | (0.027) | 0.001 | (0.003) |
| Compound F | 0:1 | - | - | 0.003 | (0.003) |
| (±)-Dione | 1:0 | 0.627 | (0.627) | - | - |
| Compound G + (±)-Dione | 1:0.2 | 0.053 | (0.094) | 0.011 | (0.019) |
| Compound G | 0:1 | - | - | 0.022 | (0.022) |
| Compound K + (±)-Dione | 1:1.5 | 0.004 | (0.007) | 0.005 | (0.011) |
| Compound K | 0:1 | - | - | 0.011 | (0.011) |

Table 11

| Species SE | | | | | |
|------------|-----------------------------|---------|---------|---------|---------|
| Treatment | Ratio (±)-Dione:Mixture Partner | (±)-Dione | | Mixture Partner | |
| (±)-Dione | 1:0 | 0.371 | (0.371) | - | - |
| Compound L + (±)-Dione | 1:0.3 | 0.008 | (0.091) | 0.003 | (0.027) |
| Compound L | 0:1 | - | - | 0.036 | (0.036) |
| Compound M + (±)-Dione | 1:0.12 | 0.094 | (0.229) | 0.011 | (0.028) |
| Compound M | 0:1 | - | - | 0.072 | (0.072) |

Example 8

Post-emergence Herbicidal Activity

To evaluate the post-emergence herbicidal activity of mixtures of (±)-dione and, as mixture partner, one of compounds N to S identified below, post-emergence tests were carried out as described in Example 2 on five plant species. Evaluations were made at 19 days after treatment and $GID_{50}$ values calculated as described in Example 3. The compounds and mixtures were formulated in water.

Mixture Partners:

(E,E)-(±)-2-[1-[[(3-chloro-2-propenyl)oxy]imino]-propyl]-5-[2-(ethylthio)propyl]-3-hydroxy-2-cyclohexen-1-one. ("Compound N")
4-amino-3,5-dichloro-6-fluoro-2-pyridyloxyacetic acid. ("Compound O")
3-[(methoxycarbonyl)amino]phenyl (3-methyl-phenyl)-carbamate. ("Compound P")
3,5-dibromo-4-hydroxy benzonitrile. ("Compound Q")

23

1-benzothiazol-2-yl-1,3-dimethylurea. ("Compound R")
3-[2,4-dichloro-5-(1-methylethoxy)phenyl]-5-(1,1-dimethylethyl)-1,3,4-oxadiazol-2(3H)-one. ("Compound S")

Plant Species:

| Wheat, Triticum aestivum | (WH) |
| Bindweed, Calystegia sepium | (SE) |
| Bindweed, Convolvulus arvensis | (CV) |
| Cleavers, Galium aparine | (GG) |
| Barren Brome Bromus sterilis | (BB) |

The results are given in Tables 12 to 16 below.

Table 12

| Species WH | | | | | |
|---|---|---|---|---|---|
| Treatment | Ratio (±)-Dione:Mixture Partner | (±)-Dione | | Mixture Partner | |
| (±)-Dione | 1:0 | 2.860 | (2.860) | - | - |
| Compound N + (±)-Dione | 1:0.12 | 0.268 | (0.741) | 0.032 | (0.089) |
| Compound N | 0:1 | - | - | 0.120 | (0.120) |

Table 13

| Species SE | | | | | |
|---|---|---|---|---|---|
| Treatment | Ratio (±)-Dione:Mixture Partner | (±)-Dione | | Mixture Partner | |
| (±)-Dione | 1:0 | 0.330 | (0.330) | - | - |
| Compound O + (±)-Dione | 1:0.1 | 0.036 | (0.077) | 0.004 | (0.008) |
| Compound O | 0:1 | - | - | 0.010 | (0.010) |

Table 14

| Species CV | | | | | |
|---|---|---|---|---|---|
| Treatment | Ratio (±)-Dione:Mixture Partner | (±)-Dione | | Mixture Partner | |
| (±)-Dione | 1:0 | 0.120 | (0.120) | - | - |
| Compound P + (±)-Dione | 1:0.5 | 0.007 | (0.080) | 0.003 | (0.040) |
| Compound P | 0:1 | - | - | 0.120 | (0.120) |

24

Table 15

| Species GG | | | | | |
| --- | --- | --- | --- | --- | --- |
| Treatment | Ratio (±)-Dione:Mixture Partner | (±)-Dione | | Mixture Partner | |
| (±)-Dione | 1:0 | 0.350 | (0.350) | - | - |
| Compound Q + (±)-Dione | 1:0.5 | 0.007 | (0.110) | 0.003 | (0.055) |
| Compound Q | 0:1 | - | - | 0.080 | (0.080) |
| Compound R + (±)-Dione | 1:1.75 | 0.007 | (0.049) | 0.013 | (0.086) |
| Compound R | 0:1 | - | - | 0.100 | (0.100) |
| Compound P + (±)-Dione | 1:0.5 | 0.040 | (0.258) | 0.020 | (0.129) |
| Compound P | 0:1 | - | - | 0.490 | (0.490) |

Table 16

| Species BB | | | | | |
| --- | --- | --- | --- | --- | --- |
| Treatment | Ratio (±)-Dione:Mixture Partner | (±)-Dione | | Mixture Partner | |
| (±)-Dione | 1:0 | 0.890 | (0.890) | - | - |
| Compound S + (±)-Dione | 1:0.6 | 0.044 | (0.128) | 0.026 | (0.077) |
| Compound S | 0:1 | - | - | 0.090 | (0.090) |
| Compound R + (±)-Dione | 1:1.75 | 0.080 | (0.235) | 0.140 | (0.412) |
| Compound R | 0:1 | - | - | 0.560 | (0.560) |

**Claims**

1. A herbicidal composition comprising a first compound capable of combating undesired plant growth in admixture with 3-(1-amino)ethylidene-5-methyl-furan-2,4-dione, together with a carrier.

2. A herbicidal composition according to claim 1, wherein the first compound is selected from 2-chloro-4,6-bis(ethylamino)-1,3,5-triazine, 2,6-dichlorobenzonitrile, 2-chloro-4-(1-cyano-1-methylethylamino)-6-ethyl-amino-1,3,5-triazine, 3-(3,4-dichlorophenyl)-1,1-dimethylurea, 3-(5-tert-butylisoxazol-3-yl)-1,1-dimethylurea, 1,1′-dimethyl-4,4′-bipyridyldiylium salts, N-(phosphonomethyl)glycine, (RS)-2-amino-4-(hydroxymethylphosphinyl)butanoic acid, 1H-1,2,4-triazol-3-amine, 5-bromo-6-methyl-3-(1-methylpropyl)-2,4-(1H,3H)-pyrimidinedione, (2,4-dichlorophenoxy)acetic acid, 9-hydroxyfluorene-9-carboxylic acid and 2-chloro-1-(3-ethoxy-4-nitrophenoxy)-4-(trifluoromethyl)benzene, (E,E)-(±)-2-[1-[[(3-chloro-2-propenyl)oxy]-imino]propyl]-5-[2-(ethylthio)-propyl]-3-hydroxy-2-cyclohexen-1-one, 4-amino-3,5-dichloro-6-fluoro-2-pyridyloxyacetic acid, 3-[(methoxycarbonyl) amino]phenyl (3-methyl-phenyl)-carbamate, 3,5-dibromo-4-hydroxy benzonitrile, 1-benzothiazol-2-yl-1,3-dimethylurea and 3-[2,4-dichloro-5-(1-methylethoxy)phenyl]-5-(1,1-dimethylethyl)-1,3,4-oxadiazol-2(3H)-one.

3. A herbicidal composition according to claim 1 or claim 2, which comprises a first compound in admixture with racemic 3-(1-amino)ethylidene-5-methyl-furan-2,4-dione.

4. A herbicidal composition according to claim 1 or claim 2, which comprises a first compound in admixture with an (S)-enantiomer of 3-(1-amino)ethylidene-5-methyl-furan-2,4-dione.

5. A herbicidal composition according to any one of the preceding claims, wherein the proportion of first compound to furan-2,4-dione is in the range of from 10:1 to 1:100 by weight.

6. A herbicidal composition according to any one of the preceding claims, which comprises at least two carriers, at least one of which is a surface active agent.

7. A method of combating undesired plant growth at a locus which comprises treating the locus with a composition as claimed in any one of the preceding claims.

8. The use of a composition as claimed in any one of claims 1 to 6 as a herbicide.